# EUROPÄISCHE PATENTSCHRIFT

(11) **EP 1 227 023 B1**
(45) Veröffentlichungstag und Bekanntmachung des Hinweises auf die Patenterteilung: **18.05.2005**
(21) Anmeldenummer: 02090025.4
(22) Anmeldetag: 18.01.2002
(51) Int. Cl.: B61K 9/06

(54) **Verfahren zum Erzeugen eines einen Lagerschaden an einem Achslager angebenden Alarmsignals**
Procedure for producing an alarm signal related to a bearing damage of a jounal bearing
Procédé pour produire un signal d'alarme en relation avec un endommagement d'un palier d'arbre

(30) Priorität: 25.01.2001 DE 10105027
(43) Veröffentlichungstag der Anmeldung: 31.07.2002
(73) Patentinhaber: SIEMENS AKTIENGESELLSCHAFT, 80333 München (DE)
(72) Erfinder: Talke, Wolfgang,Dr., 38889 Blankenburg (DE); Wiemers, Thomas,Dr., 81249 München (DE)

(56) Entgegenhaltungen:
- DE-A- 19 826 422
- DE-A- 19 919 604
- DE-C- 19 827 931

## Beschreibung

Die Erfindung bezieht sich auf ein Verfahren zum Erzeugen eines Alarmsignals, das einen Lagerschaden an einem Achslager einer fahrzeugseitigen Achse angibt, bei dem die Temperatur des Achslagers unter Bildung eines Temperaturmesswerts gemessen wird und das Alarmsignal unter Heranziehung des Temperaturmesswerts erzeugt wird.

Ein derartiges Verfahren ist aus der europäischen Patentschrift EP 0 424 570 B1 bekannt. Bei diesem vorbekannten Verfahren wird geprüft, ob die Temperatur eines Achslagers einer schienenfahrzeugseitigen Achse überhitzt ist. Hierzu wird die von dem Achslager abgegebene Infrarotstrahlung gemessen und ausgewertet; das vorbekannte Verfahren macht sich dabei zunutze, dass die Infrarotstrahlung temperaturabhängig ist, so dass durch Messung der Infrarotstrahlung die Temperatur des Achslagers festgestellt werden kann.

Der Erfindung liegt die Aufgabe zugrunde, ein besonders zuverlässiges Verfahren zum Erzeugen eines Alarmsignals anzugeben, das einen Lagerschaden an einem Achslager einer fahrzeugseitigen Achse angibt.

Diese Aufgabe wird ausgehend von dem eingangs genannten Verfahren erfindungsgemäß dadurch gelöst, dass mit einer fahrzeugseitigen Schwingungsmesseinrichtung das Schwingungsverhalten der Achse gemessen wird und das Alarmsignal erzeugt wird, falls der Temperaturmesswert einen vorgegebenen Grenzwert überschreitet und das gemessene Schwingungsverhalten von einem vorgegebenen Normverhalten abweicht.

Ein wesentlicher Vorteil des erfindungsgemäßen Verfahrens besteht darin, dass bei diesem das Alarmsignal - im Unterschied zu dem vorbekannten Verfahren - nicht in Abhängigkeit eines einzigen Messkriteriums gebildet wird, sondern in Abhängigkeit von zwei Messkriterien. Konkret wird das Alarmsignal nämlich nur dann erzeugt, wenn die Achslagertemperatur zu hoch ist und wenn gleichzeitig das Schwingungsverhalten der Achse von einem vorgegebenen Normverhalten abweicht. Die Erfindung basiert auf der Erkenntnis, dass eine erhöhte Achslagertemperatur zwar ein Indiz für einen Lagerschaden ist, jedoch noch nicht zwangsläufig auch auf einen Lagerschaden basieren muss. So schwankt die Achslagertemperatur bei "funktionstüchtigen" Achslagern jahreszeit- und betriebsartbedingt ganz erheblich; dies bedeutet, dass beispielsweise im Sommer bei hohen Umgebungstemperaturen viel höhere Achslagertemperaturen auftreten als im Winter. Um nun ein fehlerhaftes Erzeugen von Alarmsignalen in den heißen Sommermonaten zu vermeiden, muss die Grenzwerttemperatur zur Auslösung des Alarmsignals relativ hoch sein; dies führt allerdings zu einem schlechten Auslöseverhalten in den kalten Wintermonaten, weil nämlich Temperaturerhöhungen des Achslagers aufgrund eines sich anbahnenden Lagerschadens sehr lange unentdeckt bleiben. Diese Problematik wird durch das erfindungsgemäße Verfahren sehr einfach gelöst, indem das Erzeugen eines Alarmsignals von dem Auftreten einer erhöhten Lagertemperatur und einem gleichzeitigen bzw. zeitgleichen Auftreten eines anormalen Schwingungsverhaltens abhängig gemacht wird. Aufgrund dieser Maßnahme ist es daher möglich, die Grenzwerttemperatur zur Auslösung eines Alarmsignals relativ klein vorzuwählen, weil das Alarmsignal ausschließlich dann erzeugt wird, wenn zusätzlich auch ein ungewöhnliches bzw. abnormes Schwingungsverhalten der Achse vorliegt.

Besonders einfach und damit vorteilhaft lässt sich die Temperatur des Achslagers und das Schwingungsverhalten der Achse bestimmen, indem die Kodierung einer im Bereich des Achslagers angebrachten, mit akustischen Oberflächenwellen arbeitenden Identifizierungsmarke - OFW-Tag bzw. OFW-Identifizierungsmarke genannt - von einer Normalkodierung in eine Sonderkodierung umgeschaltet wird, sobald das gemessene Schwingungsverhalten von einem vorgegebenen Normverhalten abweicht, das OFW-Tag mit einem elektromagnetischen Anregungssignal zum Erzeugen eines Antwortsignals angeregt wird, die Phasenverschiebung zwischen dem Anregungssignal und dem Antwortsignal unter Bildung eines Phasenmesswertes gemessen wird, der Temperaturmesswert unter Heranziehung des Phasenmesswertes ermittelt wird und das Alarmsignal erzeugt wird, falls der Temperaturmesswert den vorgegebenen Grenzwert überschreitet und das Antwortsignal die Sonderkodierung aufweist. Das erfindungsgemäße Verfahren gemäß dieser Weiterbildung macht von den hervorragenden Eigenschaften von OFW-Tags Gebrauch. So lässt sich die Temperatur eines Achslagers mit einem OFW-Tag sehr einfach messen, indem - wie erfindungsgemäß angegeben - das OFW-Tag einfach im Bereich des Achslagers der Achse angebracht wird und die Phasenverschiebung zwischen Anrege- und Antwortsignal ausgewertet wird. Die Information, dass ein anormales, mit Hilfe eines separaten Schwingungssensors ermitteltes Schwingungsverhalten der Achse vorliegt, wird dabei in einfacher Weise von dem OFW-Tag zu einer streckenseitigen oder auch fahrzeugseitigen Auslese- bzw. Auswerteeinrichtung übertragen, indem die Kodierung des OFW-Tags in Abhängigkeit von den Messsignalen der Schwingungsmesseinrichtung umgeschaltet wird. zusammengefasst lässt sich das erfindungsgemäße Verfahren gemäß dieser Weiterbildung also aufgrund der Verwendung eines OFW-Tags in sehr einfacher Weise durchführen. Das Messen von Temperaturen mit Hilfe von OFW-Tags ist für sich aus der PCT-Veröffentlichungsschrift WO 93/13495 bekannt. Das Umkodieren von OFW-Tags ist für sich in der deutschen Patentschrift DE 43 36 504 C1 beschrieben. Die Verwendung von OFW-Tags zur Erkennung von Schäden an Schienenfahrzeugen ist außerdem aus der PCT-Veröffentlichungsschrift WO 00/09378 bekannt.

Besonders einfach und damit vorteilhaft lässt sich die Kodierung eines OFW-Tags modifizieren, indem zum Umschalten der Kodierung von der Normalkodierung in die Sonderkodierung mindestens ein Reflektor des OFW-Tags aktiviert oder deaktiviert wird.

Um zu erreichen, dass sich das Alarmsignal auch achslagerindividuell generieren lässt, ist erfindungsgemäß vorgesehen, dass als OFW-Tag ein Tag mit einer Kodierung verwendet wird, das eine achslagerspezifische Achslagerkennung enthält, die Achslagerkennung des OFW-Tags ausgelesen wird und als Alarmsignal ein Alarmsignal mit einer die Achslagerkennung enthaltenden Alarmsignalkodierung erzeugt wird.

Zur Erläuterung der Erfindung zeigt
Figur 1 einen in einem Achslager gelagerte Achse eines Schienenfahrzeugs und
Figur 2 ein Ausführungsbeispiel einer Anordnung zur Durchführung des erfindungsgemäßen Verfahrens.

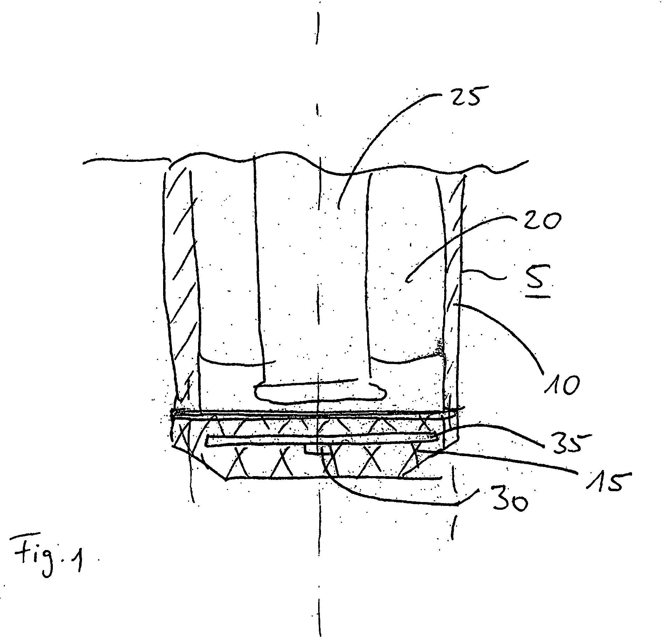

Die Figur 1 zeigt eine Achslagervorrichtung 5 zur Lagerung einer Achse eines in der Figur 1 nicht dargestellten Schienenfahrzeugs. Die Achslagervorrichtung 5 weist ein Achslagergehäuse 10 auf, das an seinem einen Ende durch einen Lagerdeckel 15 verschlossen ist. In dem Achslagergehäuse 10 ist ein Achslager 20 eingebettet, das die Achse des nicht dargestellten Schienenfahrzeugs lagert. In der Figur 1 ist von der Achse des Schienenfahrzeugs lediglich der Achsstumpf mit dem Bezugszeichen 25 dargestellt. Wie sich der Figur 1 entnehmen lässt, ist in dem Lagerdeckel 15 ein OFW-Tag 30 integriert. Dieses OFW-Tag 30 weist eine Antenne 35 zum Empfang und Senden elektromagnetischer Strahlung auf.

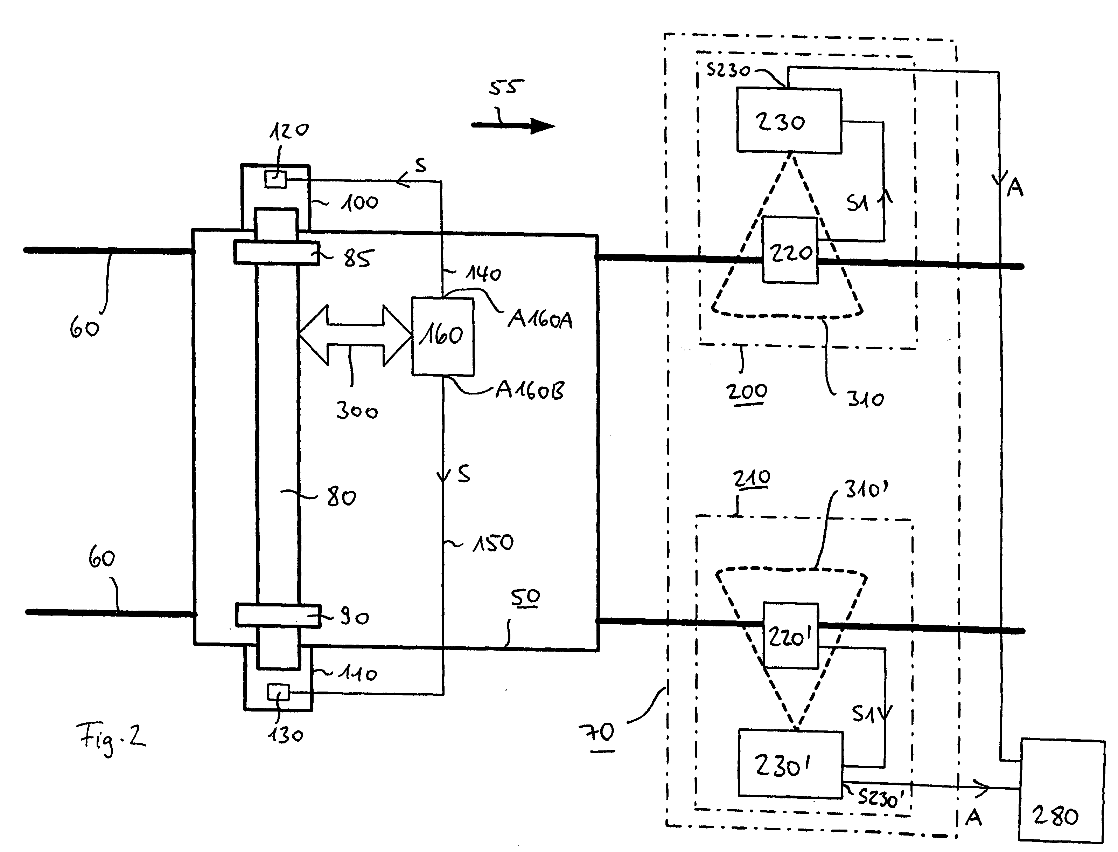

Die Figur 2 zeigt ein Schienenfahrzeug 50, das sich in Fahrtrichtung (dargestellt durch einen Pfeil 55) auf einem Gleis 60 auf eine Einrichtung 70 zu bewegt. Die Einrichtung 70 dient zum Erzeugen eines Alarmsignals A, das einen Lagerschaden an einem Achslager eines Schienenfahrzeugs angibt. In der Figur 2 ist der Übersicht halber lediglich eine einzige Achse des Schienenfahrzeugs 50 dargestellt; diese Achse trägt das Bezugszeichen 80. An der Achse 80 des Schienenfahrzeugs 50 sind zwei Räder 85 und 90 befestigt. Die Achse 80 ist in einer Achslagervorrichtung 100 und in einer weiteren Achslagervorrichtung 110 gelagert. Die beiden Achslagervorrichtungen 100 und 110 gemäß der Figur 2 entsprechen der Achslagervorrichtung 5 gemäß der Figur 1. In jeder der beiden Achslagervorrichtungen 100 und 110 ist jeweils ein OFW-Tag 120 bzw. 130 integriert. Die beiden OFW-Tags 120 und 130 sind jeweils über Verbindungsleitungen 140 und 150 mit einer Schwingungsmesseinrichtung 160 verbunden.

Die Einrichtung 70 zum Erzeugen des Alarmsignals A enthält zwei Untereinheiten 200 und 210, die identisch aufgebaut sind. Die beiden Untereinheiten 200 und 210 weisen jeweils ein Gleisschaltmittel 220 und 220' - beispielsweise einen Doppelradsensor - auf, der mit einer Auswerteeinrichtung 230 bzw. 230' verbunden ist.

Die beiden Untereinheiten sind mit ihren Signalausgängen S230 bzw. S230' jeweils mit einer Zentraleinheit 280 verbunden.

### Die Anordnung gemäß der Figur 2 wird wie folgt betrieben:

Mit der Schwingungsmesseinrichtung 160 wird das Schwingungsverhalten der Achse 80 gemessen und ausgewertet (zur Messung des Schwingungsverhaltens vgl. z. B. die PCT-Schrift WO 00/09378). Dies ist in der Figur 2 durch einen Doppelpfeil mit dem Bezugszeichen 300 schematisch dargestellt. Stellt die Schwingungsmesseinrichtung 160 ein anormales Schwingungsverhalten der Achse 80 fest, so erzeugt sie an ihrem einen Ausgang A160A sowie an ihrem weiteren Ausgang A160B jeweils ein Steuersignal S und überträgt dieses zu den beiden OFW-Tags 120 bzw. 130. Durch diese Steuersignale S wird die Kodierung der OFW-Tags umgeschaltet, d. h. sie werden von einer Normalkodierung in eine Sonderkodierung umgeschaltet. Dieses Umschalten erfolgt konkret dadurch, dass mindestens ein Reflektor des jeweiligen OFW-Tags aktiviert oder deaktiviert bzw. umgeschaltet wird; wie sich die Kodierung von OFW-Tags umschalten lässt, ist in der bereits genannten deutschen Patentschrift DE 43 36 504 C1 beschrieben. Da - wie sich insbesondere auch der Figur 1 entnehmen lässt - die beiden OFW-Tags 120 und 130 in unmittelbarer Nähe des Achslagers der Achse 80 angebracht sind, weisen die beiden OFW-Tags jeweils eine Temperatur auf, die direkt von der Achslagertemperatur der jeweiligen Achslagervorrichtung abhängt bzw. mit dieser nahezu identisch ist. Die Temperatur der beiden OFW-Tags 120 und 130 ist also ein direktes Maß für die jeweilige Achslagertemperatur der beiden Achslager in den Achslagervorrichtungen 100 bzw. 110.

Bewegt sich das Schienenfahrzeug 50 nun in Fahrtrichtung 55 auf die Einrichtung 70 zum Erzeugen des Alarmsignales A zu, so werden die Räder 85 bzw. 90 der Achse 80 die beiden Gleisschaltmittel 220 und 220' auslösen. Da die beiden Untereinheiten 200 und 210 identisch sind, wird nachfolgend nur die Arbeitsweise der einen Untereinheit 200 erläutert; denn die weitere Untereinheit 210 verhält sich genauso wie die eine Untereinheit 200.

Das Gleisschaltmittel 220 wird dann - sobald das Rad 80 das Gleisschaltmittel 220 passiert - ein Auslösesignal S1 erzeugen und dieses zur Auswerteeinrichtung 230 übertragen. Die Auswerteeinrichtung 230 wird daraufhin ein elektromagnetisches Anregesignal erzeugen. Dieses Anregesignal ist in der Figur 2 schematisch durch eine Strahlungskeule 310 (bzw. 310') dargestellt. Aufgrund des Anregesignales wird das OFW-Tag 120 ein Antwortsignal generieren und zu der Auswerteeinrichtung 230 zurücksenden. Die Auswerteeinrichtung 230 wertet das empfangene Antwortsignal aus und erzeugt ein Alarmsignal A, wenn das empfangene Antwortsignal anzeigt, dass die Temperatur des Achslagers einen vorgegebenen Grenzwert überschreitet und das Schwingungsverhalten der Achse von einem vorgegebenen Normalverhalten abweicht.

Die Auswerteeinrichtung 230 arbeitet dabei wie folgt: Zunächst misst sie die zeitliche Verschiebung zwischen dem Absenden des Anregesignals und dem Empfangen des Antwortsignals; diese Zeitverschiebung lässt sich auch als Phasenverschiebung zwischen dem Anregesignal und dem Antwortsignal auffassen. Unter Heranziehung dieses so gemessenen Phasenmesswertes ermittelt sie dann in an sich bekannter Weise (vgl. beispielsweise die PCT-Veröffentlichungsschrift WO 93/13495 bzw. den Artikel "Sensorik: Drahtlos identifizieren" aus dem Heft Elektronik, 26/1995, und den Artikel "Fahrzeugidentifizierung und Ortung mit Oberflächenwellentechnik - das Identsystem SOFIS",Signal+Draht (88) 7+8/96 ) die Temperatur des Achslagers der Achslagevorrichtung 100.

Überschreitet die ermittelte Temperatur bzw. der entsprechende Temperaturmesswert einen in der Auswerteeinrichtung 230 abgespeicherten, vorgegebenen Temperaturgrenzwert, so ist das erste Kriterium zum Erzeugen des Alarmsignals A gegeben.

Anschließend überprüft die Auswerteeinrichtung 230, welche Kodierung das OFW-Tag 120 aufweist. Weist das OFW-Tag 120 eine, in der Auswerteeinrichtung 230 abgespeicherte Normalkodierung auf, so weiß die Auswerteeinrichtung 230, dass das Schwingungsverhalten der Achse 80 des Schienenfahrzeugs 50 normal ist. Ein Überschreiten der Temperatur des Achslagers ist somit nicht auf einen defekten Lagerschaden des Achslagers zurückzuführen, sondern ggf. auf die Umwelt- bzw. Betriebsbedingungen (z. B. hohe Geschwindigkeit des Schienenfahrzeugs 50) beim Betrieb der Achse 80. Ein Alarmsignal A wird in diesem Fall nicht erzeugt.

Enthält die Kodierung des OFW-Tags 120 hingegen eine in der Auswerteeinrichtung 230 abgespeicherte Sonderkodierung, so zeigt dies der Auswerteeinrichtung 230 an, dass das Schwingungsverhalten der Achse 80 anormal ist. Wenn dann gleichzeitig noch der Temperaturmesswert den vorgegebenen Temperaturgrenzwert überschreitet, so erzeugt die Auswerteeinrichtung 230 an ihrem Signalausgang das Alarmsignal A.

Die Untereinheit 210 arbeitet in gleicher Weise und erzeugt ihr Alarmsignal A dann, wenn das OFW-Tag 130 eine entsprechende Temperatur bzw. eine entsprechende Kodierung aufweist.

Damit in der Zentraleinheit 280 zu jedem Alarmsignal A jeweils das zugehörige OFW-Tag bzw. die zugehörige Achse zugeordnet werden kann, übertragen die beiden OFW-Tags 120 bzw. 130 jeweils achslagerspezifische Kodierungen, so dass die beiden Untereinheiten 200 bzw. 210 bzw. die beiden Auswerteeinrichtungen 230 und 230' zu jedem Alarmsignal A auch jeweils die entsprechende Kodierung der Achse zu der Zentraleinheit 280 übermitteln können.

Um einen möglichst sicheren Eisenbahnbetrieb zu gewährleisten, sollten stets alle Achsen der Schienenfahrzeuge in der beschriebenen Weise überwacht werden. Dies setzt allerdings voraus, dass alle Achslager mit entsprechenden OFW-Tags 120 bzw. 130 ausgestattet werden.

Die Zentraleinheit 280 und die beiden Untereinheiten 200 und 210 können - zusätzlich zur oder anstelle der Achslagerüberwachung - auch zum Identifizieren von vorbeifahrenden Schienenfahrzeugen eingesetzt werden; dies setzt allerdings voraus, dass in der Zentraleinheit 280 für alle in Frage kommenden bzw. zu identifizierenden Schienenfahrzeuge die Kodierungen der Achslagervorrichtungen abgespeichert werden. Anschließend kann dann mit den beiden Untereinheiten 200 und 210 von jeder vorbeifahrenden Achslagervorrichtung 100 und 110 jeweils die achslagerspezifische Kodierung erfasst und zur Zentraleinheit 280 übertragen werden. Durch Vergleich der übertragenen achslagerspezifischen Kodierungen mit in der Zentraleinheit 280 schienenfahrzeugbezogen abgespeicherten Kodierungen kann die Zentraleinheit 280 dann feststellen, welches Schienenfahrzeug an den beiden Untereinheiten 200 und 210 vorbeigefahren sein muss. Damit lässt sich mit der Zentraleinheit 280 und den beiden Untereinheiten 200 und 210 natürlich auch die Erkennung ganzer Eisenbahnzüge durchführen, indem nämlich einfach die einzelnen Wagen des Zuges nacheinander identifiziert und die Identifizierungsergebnisse mit abgespeicherten Zugdaten verglichen werden. Außerdem kann mit der Zentraleinheit 280 und den beiden Untereinheiten 200 und 210 auch die Zugvollständigkeit und die Zugintegrität eines Zuges festgestellt werden, indem nach der Identifikation der einzelnen Wagen eines vorbeifahrenden Zuges in der Zentraleinheit 280 überprüft wird, ob der vorbeigefahrene Zug alle Wagen aufgewiesen hat, die in der Zentraleinheit 280 für diesen Zug abgespeichert waren.

## Patentansprüche

1. Verfahren zum Erzeugen eines Alarmsignals (A), das einen Lagerschaden an einem Achslager (20) einer fahrzeugseitigen Achse (80) angibt, bei dem
- die Temperatur des Achslagers (20) unter Bildung eines Temperaturmesswerts gemessen wird und
- das Alarmsignal (A) unter Heranziehung des Temperaturmesswerts erzeugt wird,
**dadurch gekennzeichnet, dass**
- mit einer fahrzeugseitigen Schwingungsmesseinrichtung (160) das Schwingungsverhalten der Achse (80) gemessen wird und
- das Alarmsignal (A) erzeugt wird, falls der Temperaturmesswert einen vorgegebenen Grenzwert überschreitet und das gemessene Schwingungsverhalten von einem vorgegebenen Normverhalten abweicht.

2. Verfahren nach Anspruch 1,
**dadurch gekennzeichnet, dass**
- die Kodierung einer im Bereich des Achslagers (20) angebrachten, mit akustischen Oberflächenwellen arbeitenden Identifizierungsmarke - OFW-Tag (120,130) genannt - von einer Normalkodierung in eine Sonderkodierung umgeschaltet wird, sobald das gemessene Schwingungsverhalten von einem vorgegebenen Normverhalten abweicht,
- das OFW-Tag (120,130) mit einem elektromagnetischen Anregungssignal zum Erzeugen eines Antwortsignals (A) angeregt wird,
- die Phasenverschiebung zwischen dem Anregungssignal und dem Antwortsignal unter Bildung eines Phasenmesswertes gemessen wird,
- der Temperaturmesswert unter Heranziehung des Phasenmesswertes ermittelt wird und
- das Alarmsignal erzeugt wird, falls der Temperaturmesswert den vorgegebenen Grenzwert überschreitet und das Antwortsignal die Sonderkodierung aufweist.

3. Verfahren nach Anspruch 2,
**dadurch gekennzeichnet, dass**
- zum Umschalten der Kodierung von der Normalkodierung in die Sonderkodierung mindestens ein Reflektor des OFW-Tags (120,130) aktiviert oder deaktiviert wird.

4. Verfahren nach einem der vorangehenden Ansprüche,
**dadurch gekennzeichnet, dass**
- als OFW-Tag (120,130) ein Tag mit einer Kodierung verwendet wird, das eine achslagerspezifische Achslagerkennung enthält,
- die Achslagerkennung des OFW-Tags ausgelesen wird und
- als Alarmsignal ein Alarmsignal (A) mit einer die Achslagerkennung enthaltenden Alarmsignalkodierung erzeugt wird.

## Claims

1. Method for production of an alarm signal (A), which indicates bearing damage to a shaft bearing (20) on a vehicle-side shaft (80), in which
- the temperature of the shaft bearing (20) is measured forming a temperature measured value, and
- the alarm signal (A) is produced using the temperature measured value,
**characterized in that**
- a vehicle-side oscillation measurement device (160) is used to measure the oscillation behaviour of the shaft (80), and
- the alarm signal (A) is produced if the temperature measured value exceeds a predetermined limit value and the measured oscillation behaviour differs from a predetermined normal behaviour.

2. Method according to Claim 1,
**characterized in that**
- the coding of an identification mark - referred to as an SAW tag (120, 130) - which is fitted in the area of the shaft bearing (20) and operates by means of surface acoustic waves is switched from normal coding to special coding as soon as the measured oscillation behaviour differs from a predetermined normal behaviour,
- the SAW tag (120, 130) is stimulated by an electromagnetic stimulation signal to produce a response signal (A),
- the phase shift between the stimulation signal and the response signal is measured forming a phase measured value,
- the temperature measured value is determined using the phase measured value, and
- the alarm signal is produced if the temperature measured value exceeds the predetermined limit value and the response signal has the special coding.

3. Method according to Claim 2,
**characterized in that**
- at least one reflector of the SAW tag (120, 130) is activated or deactivated in order to switch the coding from the normal coding to the special coding.

4. Method according to one of the preceding claims,
**characterized in that**
- a tag with a coding which contains a shaft-bearing-specific shaft bearing identification is used as the SAW tag (120, 130),
- the shaft bearing identification in the SAW tag is read, and
- an alarm signal (A) with an alarm signal coding which contains the shaft bearing identification is produced as the alarm signal.

## Revendications

1. Procédé de production d'un signal (A) d'alerte qui indique qu'un palier (20) d'un essieu (80) de véhicule est endommagé, dans lequel
- on mesure la température du palier (20) d'essieu en formant une valeur de mesure de la température et
- on produit le signal (A) d'alerte en tirant parti de la valeur de mesure de la température,
**caractérisé en ce que**
- on mesure le comportement en oscillation de l'essieu (80) par un dispositif (160) de mesure de l'oscillation côté véhicule et
- on produit le signal (A) d'alerte dans le cas où la valeur de mesure de la température dépasse une valeur limite prescrite et où le comportement en oscillation qui a été mesuré s'écarte d'un comportement prescrit suivant une norme.

2. Procédé suivant la revendication 1,
**caractérisé en ce que**
- on fait passer le codage d'un repère d'identification disposé dans la zone du palier (20) d'essieu et fonctionnant à l'aide d'ondes de surface acoustiques dénommées étiquettes d'ondes de surface (120, 130), d'un codage normal à un codage particulier dès que le comportement en oscillation qui est mesuré s'écarte d'un comportement prescrit suivant une norme,
- on excite l'étiquette d'onde de surface (120, 130) par un signal d'excitation électromagnétique pour produire un signal (A) de réponse,
- on mesure le déphasage entre le signal d'excitation et le signal de réponse en formant une valeur de mesure de phase,
- on détermine la valeur de mesure de température en tirant parti de la valeur de mesure de phase et
- on produit le signal d'alerte dans le cas où la valeur de mesure de la température dépasse la valeur limite prescrite et le signal de réponse comporte le codage particulier.

3. Procédé suivant la revendication 2,
**caractérisé en ce que**
- pour faire passer le codage du codage normal au codage particulier, on active ou on désactive au moins un réflecteur de l'étiquette d'ondes de surface (120, 130).

4. Procédé suivant l'une des revendications précédentes,
**caractérisé en ce que**
- on utilise comme étiquette d'ondes de surface (120, 130) une étiquette ayant un codage qui contient une identification spécifique au palier d'essieu,
- on lit l'identification de palier d'essieu de l'étiquette d'ondes de surface et
- on produit comme signal d'alerte un signal (A) d'alerte ayant un codage de signal d'alerte contenant l'identification du palier d'essieu.
